# EUROPÄISCHE PATENTSCHRIFT

(11) **EP 1 341 847 B1**
(45) Veröffentlichungstag und Bekanntmachung des Hinweises auf die Patenterteilung: **03.08.2005**
(21) Anmeldenummer: 01996579.7
(22) Anmeldetag: 14.11.2001
(51) Int. Cl.: C08L 63/00, H01B 3/40

(54) **WÄRMELEITFÄHIGE VERGUSSMASSE**
THERMALLY CONDUCTIVE CASTING COMPOUND
MASSE DE REMPLISSAGE

(30) Priorität: 16.11.2000 DE 10057111
(43) Veröffentlichungstag der Anmeldung: 10.09.2003
(73) Patentinhaber: ROBERT BOSCH GMBH, 70442 Stuttgart (DE)
(72) Erfinder: JENNRICH, Irene, 71364 Winnenden (DE); LEO, Kristian, 71576 Murr (DE); MUZIC, Markus, 71711 Murr (DE); ENDRES, Wolfgang, 73630 Remshalden (DE)
(86) Internationale Anmeldenummer: PCT/DE2001/004268
(87) Internationale Veröffentlichungsnummer: WO 2002/040589

(56) Entgegenhaltungen:
- US-A- 5 248 710
- US-A- 5 497 033
- US-A- 5 965 637
- US-A- 6 037 043

## Beschreibung

### Stand der Technik

Die Erfindung bezieht sich auf eine Vergußmasse nach Anspruch 1 und deren Verwendung.

Vergußmassen auf der Basis eines durch eine chemische Reaktion aushärtenden Harzes spielen bei der Herstellung technischer Bauteile und Komponenten eine große Rolle. Sie werden dabei unter anderem zu Isolierzwecken bei elektrischen oder elektronischen Bauteilen eingesetzt. Erwärmen sich derartige Bauteile während ihres Betriebs, so muß für eine ausreichende Wärmeabfuhr gesorgt werden. Entsteht die Wärme direkt in den Leiterbahnen des Bauteils, so ist zu deren Isolation oder mechanischen Fixierung der Einsatz von Vergußmassen wünschenswert, die thermisch hoch belastbar sind und eine hohe Wärmeleitfähigkeit aufweisen.

Aus der DE 41 38 411 C2 sind härtende Vergußmassen bekannt, die u.a. zur mechanischen Fixierung und Wärmeabfuhr für Wicklungen wassergekühlter Generatoren dienen. Die dort beschriebenen Vergußmassen sind jedoch als Zweikomponentensysteme ausgeführt und weisen eine Wärmeleitfähigkeit von 0.8 bis 1.8 W/mK auf.

Bei Zweikomponentensystemen ist die eine Komponente ein Härter, der mit der anderen Komponente, die Reaktionsharze, Füllstoffe etc. enthält, gemischt und sofort verarbeitet wird. Dies ist nachteilig, da die Bereitstellung der Vergußmasse in den Verarbeitungsprozeß integriert werden muß und eine Lagerung für beispielsweise 3 bis 12 Monate in einsatzfähigem Zustand bei Raumtemperatur nicht möglich ist. Ein weiterer Nachteil besteht in der nur unter großem technischem Aufwand zu gewährleistenden Arbeitssicherheit im Umgang mit der härtenden Komponente, da als Härter oft gesundheitsschädliche oder reizende Verbindungen wie Carbonsäureanhydride oder Amine eingesetzt werden. Aus diesem Grund ist die Entwicklung von Vergußmassen als sogenannte. Einkomponentensysteme wünschenswert, die im bereits vorgemischten Zustand längere Zeit gelagert werden können.

Der vorliegenden Erfindung liegt die Aufgabe zugrunde, eine Vergußmasse bereitzustellen, die als Einkomponentensystem lagerbeständig und direkt verarbeitbar ist, die während der Verarbeitung eine gute Fließfähigkeit zeigt und im ausgehärteten Zustand eine hohe thermische Belastbarkeit und Wärmeleitfähigkeit aufweist.

### Vorteile der Erfindung

Die der Erfindung zugrundeliegende Aufgabe wird erfindungsgemäß durch die Bereitstellung einer als Einkomponentensystem verarbeitbaren Vergußmasse gelöst, die bedingt durch die Wahl des Füllstoffgemisches eine Wärmeleitfähigkeit ≥ 2.0 W/mK aufweist. Diese Vergußmasse zeichnet sich durch eine niedrige Viskosität und eine gute Kapillarwirkung während der Verarbeitung auf und zeigt im ausgehärteten Zustand eine so hohe Wärmeleitfähigkeit, daß sie sich zur Wärmeabfuhr während des Betriebs elektrischer bzw. elektronischer Bauteile eignet. Darüber hinaus ist die Vergußmasse im ausgehärteten Zustand rißbeständig und thermisch hoch belastbar.

Mit den in den Unteransprüchen aufgeführten Maßnahmen sind vorteilhafte Weiterbildungen der erfindungsgemäßen Vergußmasse möglich.

So weist die Vergußmasse eine kurze Aushärtungszeit und ein günstiges Reaktionsprofil auf und ist demzufolge gut zu verarbeiten. Dies wird durch die Wahl eines geeigneten Initiators bewirkt, der einen kationischen Vernetzer und einen Cokatalysator umfaßt.

In einer besonders vorteilhaften Ausführung weist die Vergußmasse einen Anteil von bis zu 95 Gew.% eines Füllstoffs auf, der ein Gemisch von Materialkomponenten mit definierter Korngrößenverteilung beinhaltet. Dies gewährleistet eine besonders hohe Wärmeleitfähigeit der Vergußmasse, ohne daß die Viskosität der Vergußmasse während der Verarbeitung unerwünscht ansteigt.

### Ausführungsbeispiele

Vergußmassen gemäß der vorliegenden Erfindung weisen vier Grundkomponenten auf, nämlich eine Epoxidharzkomponente A, eine silikonhaltige Komponente B, einen Füllstoff C und einen Initiator D. Darüber hinaus sind weitere Komponenten vorgesehen, die üblicherweise bei gattungsgemäßen Vergußmassen Anwendung finden, wie beispielsweise Entschäumer, Sedimentationshemmer und Haftvermittler, deren Verwendung dem Fachmann geläufig ist.

Allgemein ist zu beachten, daß Vergußmassen vor und während der Verarbeitung ein stabiles System bilden müssen, um eine Entmischung der Komponenten zu verhindern. So sollten die Füllstoffpartikel eine stabile Dispersion mit den Epoxidharzkomponenten bilden und die Epoxidharzkomponenten wiederum stabile Emulsionen untereinander. Diese Stabilität muß sowohl während der Verarbeitung als auch bei der Aushärtung der Vergußmassen gewährleistet sein.

Als Epoxidharzkomponente A kann grundsätzlich eine Vielzahl monomerer oder oligomerer, mindestens zwei Epoxidfunktionen aufweisender Verbindungen, allein oder in Mischungen mit anderen Verbindungen mit oder ohne Epoxidfunktion verwendet werden. Besonders vorteilhaft ist jedoch die Verwendung von Di-, Tri- oder Tetraepoxiden, wobei die im folgenden aufgeführten, kommerziell erhältlichen Verbindungen exemplarisch aufgeführt sind:

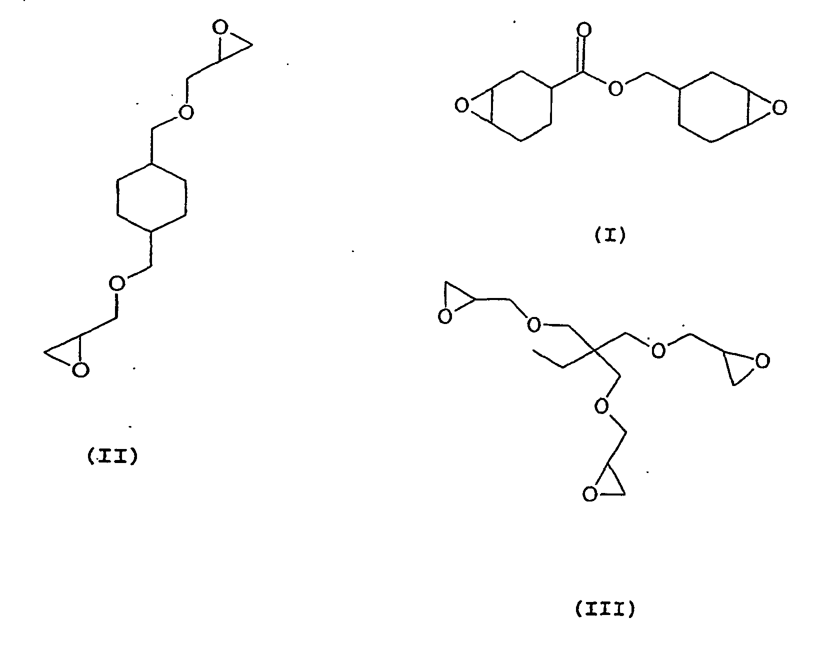

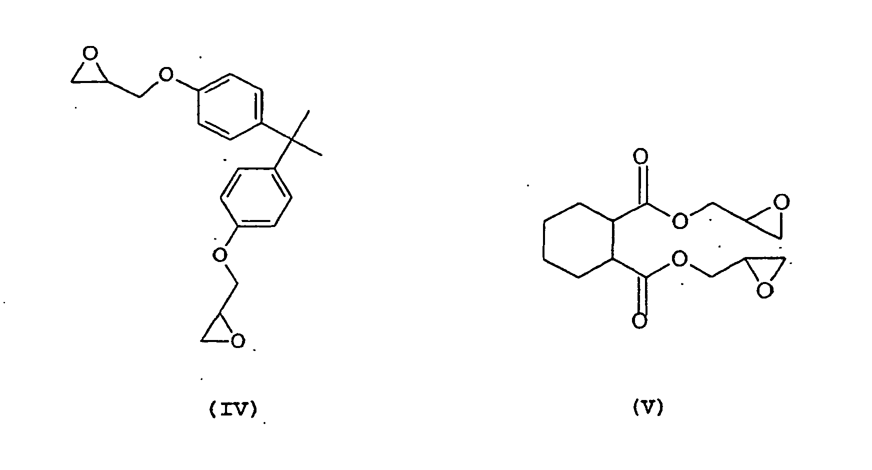

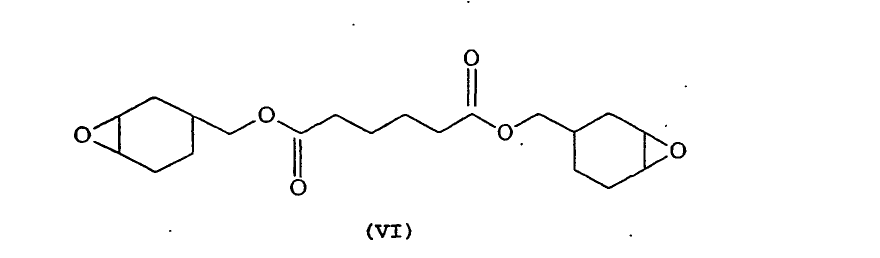

Die Epoxidharzkomponente A kann eine oder mehrere der Verbindungen (I) bis (VI) umfassen sowie weitere Komponenten. Als besonders geeignet haben sich ringepoxidierte cycloaliphatische Diepoxide, wie beispielsweise (I) und (VI), erwiesen. Die Epoxidharzkomponente A ist in der Vergußmasse zu 4 bis 25 Gew.%, bevorzugterweise zu 15 bis 20 Gew.% enthalten.

Die in der Vergußmasse darüber hinaus enthaltene silikonhaltige Komponente B stellt eine Dispersion oder Emulsion eines oder mehrerer Silikone in einem Epoxidharz dar. Als Silikone kommen Silikonöle, Silikonblockcopolymere oder Silikonpartikel in Betracht. Bevorzugt werden Silikonpartikel in Form von Silikonharz- oder Silikonelastomerpartikel mit einem Teilchendurchmesser von 10 nm bis 100 µm verwendet. Die Silikonpartikel können grundsätzlich eine chemisch modifizierte Oberfläche in Form einer Polymerschicht beispielsweise aus PMMA aufweisen (sogenannte Core-Shell-Partikel); es hat sich jedoch gezeigt, daß unbehandelte bzw. oberflächenfunktionalisierte Silikonpartikel für die der Erfindung zugrundeliegende Aufgabenstellung besser geeignet sind. Als Epoxidharz können grundsätzlich alle mindestens zwei Epoxidfunktionen aufweisenden Verbindungen allein oder in Mischungen mit anderen Verbindungen mit und ohne Epoxidfunktion verwendet werden. Besonders vorteilhaft ist jedoch die Verwendung einer oder mehrerer der oben genannten Diepoxide (I) bis (VI). Die silikonhaltige Komponente B enthält zu 10 bis 80 Gew.% Silikon, bevorzugt ist ein Anteil von 40 Gew.%. Die Vergußmasse enthält 0.5 bis 25 Gew.% der silikonhaltigen Komponente B.

Die Vergußmasse enthält weiterhin ein Füllstoffgemisch C, durch dessen geeignete Auswahl, der Korngrößenverteilungen und prozentualem Anteil in der Vergußmasse die Wärmeleitfähigkeit der Vergußmasse im ausgehärteten Zustand einstellbar ist und ein Schwund der Vergußmasse während der Verarbeitung verhindert werden kann. So eignen sich vor allem Siliziumcarbid und Hauptgruppenelementoxide wie Aluminiumoxid oder Quarzmehl in Mischungen als Füllstoff C. Als besonders geeignet hat sich die Verwendung einer Mischung von Siliziumcarbid und Aluminiumoxid erwiesen, wobei die Korngröße der verwendeten Eüllstoffpartikel eine wesentliche Rolle spielt. Dabei zeigen Vergußmassen, die Siliziumcarbid mit einer Korngrößenverteilung d₅₀ zwischen 10 und 600 µm und Aluminiumoxid mit einer Korngrößenverteilung d₅₀ von 0.1 bis 50 µm bzw. 0.1 bis 10 µm enthalten, die erwünschte Wärmeleitfähigkeit und Rißbeständigkeit in besonders ausgeprägter Weise. Vorteilhaft ist auch die Verwendung von Aluminiumoxid mit zwei oder mehr verschiedenen Korngrößenverteilungen. Die Wärmeleitfähigkeit von Aluminiumoxid als solches beträgt 28 W/mK, die von Siliziumcarbid 110 bis 126 W/mK und die von Quarzmehl ca. 3.5 W/mK. Der Füllstoff C ist in der Vergußmasse zu 60 bis 95 Gew. % enthalten, bevorzugt ist ein Anteil von 80 bis 90 Gew.%.

Als vierte Komponente D enthält die Vergußmasse einen Initiator, der eine ausreichend rasche Reaktion bei höherer Temperatur ermöglicht. Als Initiator kommen sowohl thermische als auch Photoinitiatoren in Frage. Um zu gewährleisten, daß die Vergußmasse als Einkomponentensystem verarbeitbar ist, wurde als Initiator ein kationischer Vernetzer gewählt. Dieser kann beispielsweise eine Chinolinium-, Sulfonium-, Iodonium- oder Bor-Iodoniumverbindung sein. Diese führen zu einer kationischen Polymerisation des Epoxidharzes. Der Initiator kann darüber hinaus auch einen Cokatalysator enthalten, der vor allem der Senkung der Starttemperatur der Reaktion dient. Dieser kann ein Radikalbildner wie beispielsweise Benzopinakol sein. Die Wahl des Initiators bestimmt im wesentlichen den Reaktionsverlauf der Aushärtung. Die Kombination eines kationischen Vernetzers mit einem Cokatalysator führt zu einem geeigneten Reaktionsgeschwindigkeitsprofil, das durch eine eng einzugrenzende optimale Reaktionstemperatur gekennzeichnet ist, bei der die Reaktion zügig fortschreitet, ohne daß bereits bei tieferen Temperaturen wie beispielsweise Raumtemperatur eine schleppende Reaktion einsetzt. Dies ist darüber hinaus eine Voraussetzung für die Lagerfähigkeit des Einkomponentensystems bei Raumtemperatur.

Die Verarbeitung der Vergußmasse zu einem Formteil erfolgt bei höherer Temperatur. Die Vergußmasse weist bei entsprechender Erwärmung eine so geringe Viskosität und eine so hohe Kapillarwirkung auf, daß auch ungünstige Geometrien wie Gießspalte mit einem Durchmesser von < 200 µm beim Verguß ausgegossen werden können. So beträgt die Viskosität der Vergußmasse bei 50°C ca. 50000 bis 160000 mPas im ungehärteten Zustand. Die vergossene Vergußmasse wird einer Temperatur von 125 bis 160 °C ausgesetzt, um ein Gelieren der Vergußmasse zu erreichen: Danach wird die Temperatur auf 160 bis 240°C zur Aushärtung des Formteils erhöht. Die Gelier- und Härtungszeiten liegen je nach gewählter Temperatur bei 5 Minuten bis 6 Stunden. Die dabei resultierenden Vergußmassen weisen nach der Härtung folgendes allgemeines Eigenschaftsprofil auf:
- Linearer Schwund: 0.5%
- Glasübergangstemperatur: 160 bis 190 °C
- Thermischer Ausdehnungskoeffizient: 15 bis 20*10⁻⁶ 1/°C
- Wärmeleitfähigkeit: 3 bis 3.5 W/m*K
- Isolationswiderstand: > 1*10¹² Ω

Exemplarisch werden im folgenden Ausführungsbeispiele von Vergußmassen bzw. ihrer Zusammensetzungen und resultierenden Eigenschaften im gehärteten Zustand dargestellt.

| | **Ausführungsbeispiel 1** | **Gew. Tl.** | **Ausführungsbeispiel 2** | **Gew .Tl** |
|---|---|---|---|---|
| Harz | Cycloaliphatisches EP-Harz | 88 | Cycloaliphatisches EP-Harz | 81 |
| Modifizierung | Emulsion aus cycloaliphatischem Ep-Harz mit Elastomer-Silikon-Teilchen | 12 | Emulsion aus cycloaliphatischem Ep-Harz mit Elastomer-Silikon-Teilchen | 19 |
| Füllstoff 1 | SiC, d₅₀ = 161µm | 187 | SiC d₅₀ = 283µm | 235 |
| Füllstoff 2 | Al₂O₃ d₅₀ = 7 µm | 210 | Al₂ O₃ d50 = 7 µm | 193 |
| Füllstoff 3 | Al₂O₃ d₅₀ = 2,6 µm | 70 | Al₂O₃ d₅₀ = 2, 6 µm | 74 |

Die Zusammensetzungen sind in Gewichtsteilen angegeben, der Initiator wird jeweils in sehr geringen Konzentrationen von 0.1 bis 5 Gew.% zugesetzt. Die obengenannten Zusammensetzungen ergeben folgendes Eigenschaftsprofil:

| | Ausführungsbeispiel 1 | Ausführungsbeispiel 2 |
|---|---|---|
| Viskosität 50°C | 72 000 mPas | 150 000 mPas |
| Glasübergangs-temperatur Tg | 170°C | 180°C |
| Therm. Ausdehnungskoeff. α | 18 * 10⁻⁶ 1/°C | 17* 10⁻⁶ 1/°C |
| Wärmeleitfähigkeit | 3,0 W/mK | 3,4 W/mK |
| Isolationswiderstand 1000 V | > 190 *10¹² Ω | > 1 *10¹² Ω |

Aufgrund ihrer hohen Wärmeleitfähigkeit ist die Vergußmasse vor allem für Anwendungen geeignet, bei der sich das elektrische oder elektronische Bauteil während des Betriebs stark erwärmt und gekühlt werden muß. Dies trifft unter anderem auf Wicklungen in Generatoren beispielsweise für Lichtmaschinen zu.

## Patentansprüche

1. Vergussmasse auf der Basis eines durch eine chemische Reaktion härtenden Harzes, die eine eine Epoxidharzkomponente (A), eine silikonhaltige Komponente (B), einen Füllstoff (C), über den die Wärmeleitfähigkeit der Vergussmasse im wesentlichen einstellbar ist, und einen Initiator (D) beinhaltet, **dadurch gekennzeichnet, dass** der Füllstoff eine Mischung zweier oder mehrerer verschiedener Materialkomponenten aufweist, und dass eine der Materialkomponenten Siliziumcarbid ist, wobei die Vergußmasse eine Wärmeleitfähigkeit von ≥ 2 W/mk aufweist.

2. Vergußmasse nach Anspruch 1, **dadurch gekennzeichnet, daß** das Siliziumcarbid eine Korngrößenverteilung d₅₀ von 10 bis 600 µm aufweist.

3. Vergußmasse nach einem der Ansprüche 1 oder 2, **dadurch gekennzeichnet, daß** als Materialkomponente ein Hauptgruppenelementoxid vorgesehen ist.

4. Vergußmasse nach Anspruch 3, **dadurch gekennzeichnet, daß** das Hauptgruppenelementoxid Aluminiumoxid mit einer Korngrößenverteilung d₅₀ von 0.1 - 100 µm ist.

5. Vergußmasse nach Anspruch 3 oder 4, **dadurch gekennzeichnet, daß** als erste Materialkomponente Aluminiumoxid einer ersten Korngrößenverteilung und als zweite Materialkomponente Aluminiumoxid einer zweiten Korngrößenverteilung vorgesehen ist.

6. Vergußmasse nach einem der vorhergehenden Ansprüche, **dadurch gekennzeichnet, daß** der Füllstoff (C) in der Vergußmasse zu 60 bis 95 Gew.% enthalten ist.

7. Vergußmasse nach einem der vorhergehenden Ansprüche, **dadurch gekennzeichnet, daß** die Epoxidharzkomponente (A) ein Epoxidharz auf der Basis eines Di- oder Triepoxids ist.

8. Vergußmasse nach Anspruch 8, **dadurch gekennzeichnet, daß** die Epoxidharzkomponente (A) ein Epoxidharz auf der Basis eines cycloaliphatischen Diepoxids ist.

9. Vergußmasse nach einem der vorhergehenden Ansprüche, **dadurch gekennzeichnet, daß** die silikonhaltige Komponente (B) eine Dispersion von Silikonelastomerpartikeln in einem auf einem Diepoxid basierenden Epoxidharz ist.

10. Vergußmasse nach Anspruch 9, **dadurch gekennzeichnet, daß** die Silikonelastomerpartikel einen Teilchendurchmesser von 10 nm bis 100 µm aufweisen.

11. Vergußmasse nach einem der vorhergehenden Ansprüche, **dadurch gekennzeichnet, daß** der Initiator (D) einen kationischen Vernetzer umfaßt.

12. Vergußmasse nach Anspruch 11, **dadurch gekennzeichnet, daß** der kationische Vernetzer eine Bor-Iodonium und/oder Chinoliniumverbindung ist.

13. Vergußmasse nach einem der vorhergehenden Ansprüche, **dadurch gekennzeichnet, daß** die Vergußmasse als Einkomponentensystem verarbeitbar ist.

14. Verwendung einer Vergußmasse nach einem der Ansprüche 1 bis 13 zur Abfuhr thermischer Energie aus elektrischen Bauteilen.

15. Verwendung einer Vergußmasse nach einem der Ansprüche 1 bis 13 in Wicklungen von Generatoren, insbesondere in Lichtmaschinen von Kraftfahrzeugen.

## Claims

1. Potting composition based on a chemically cured resin and in which an epoxy resin component (A), a silicone-containing component (B), a filler (C) substantially permitting adjustment of the thermal conductivity of the potting composition, and an initiator (D) are present, **characterized in that** the filler comprises a mixture of two or more different component materials, and that one of the component materials is silicon carbide, where the potting composition has a thermal conductivity of ≥ 2 W/mK.

2. Potting composition according to Claim 1, **characterized in that** the silicon carbide has a grain size distribution d₅₀ of from 10 to 600 µm.

3. Potting composition according to Claim 1 or 2, **characterized in that** a main group element oxide has been provided as component material.

4. Potting composition according to Claim 3, **characterized in that** the main group element oxide is aluminium oxide with a grain size distribution d₅₀ of from 0.1 to 100 µm.

5. Potting composition according to Claim 3 or 4, **characterized in that** aluminium oxide with a first grain size distribution has been provided as first component material and aluminium oxide with a second grain size distribution has been provided by second component material.

6. Potting composition according to one of the preceding claims, **characterized in that** from 60 to 95% by weight of the filler (C) is present in the potting composition.

7. Potting composition according to one of the preceding claims, **characterized in that** the epoxy resin component (A) is an epoxy resin based on a di- or triepoxide.

8. Potting composition according to Claim 8, **characterized in that** the epoxy resin component (A) is an epoxy resin based on a cycloaliphatic diepoxide.

9. Potting composition according to one of the preceding claims, **characterized in that** the silicone-containing component (B) is a dispersion of silicone elastomer particles in an epoxy resin based on a diepoxide.

10. Potting composition according to Claim 9, **characterized in that** the silicone elastomer particles have a particle diameter from 10 nm to 100 µm.

11. Potting composition according to one of the preceding claims, **characterized in that** the initiator (D) encompasses a cationic crosslinking agent.

12. Potting composition according to Claim 11, **characterized in that** the cationic crosslinking agent is a boron-iodonium and/or quinolinium compound.

13. Potting composition according to one of the preceding claims, **characterized in that** the potting composition can be processed as a single-component system.

14. Use of a potting composition according to one of Claims 1 to 13 for the dissipation of thermal energy forming electrical components.

15. Use of a potting composition according to one of Claims 1 to 13 in winders of generators, in particular in generators of motor vehicles.

## Revendications

1. Masse de remplissage à base d'une résine durcissant par réaction chimique, qui contient un composant résine époxyde (A), un composant contenant du silicone (B), une charge (C), par l'intermédiaire desquels la conductibilité thermique de la masse de remplissage est essentiellement ajustable, et un initiateur (D),
**caractérisée en ce que**
la charge comporte un mélange de deux ou plus de deux composants de matériaux différents et un des composants de matériaux est le carbure de silicium, la masse de remplissage présentant une conductibilité thermique supérieure ou égale à 2 W/mK.

2. Masse de remplissage selon la revendication 1,
**caractérisée en ce que**
le carbure de silicium présente une distribution granulométrique d₅₀ de 10 à 600 µm.

3. Masse de remplissage selon l'une des revendications 1 ou 2,
**caractérisée en ce qu'**
il est prévu, comme composant de matériau, un oxyde d'élément de groupe principal.

4. Masse de remplissage selon la revendication 3,
**caractérisé en ce que**
l'oxyde d'élément de groupe principal est un oxyde d'aluminium présentant une distribution granulométrique d₅₀ de 0,1 - 100 µm.

5. Masse de remplissage selon la revendication 3 ou 4,
**caractérisée en ce qu'**
il est prévu, comme premier composant de matériau, un oxyde d'aluminium d'une première distribution granulométrique et, comme deuxième composant de matériau, un oxyde d'aluminium présentant une deuxième distribution granulométrique.

6. Masse de remplissage selon l'une quelconque des revendications précédentes,
**caractérisée en ce que**
la charge (C) est contenue dans la masse de remplissage à raison de 60 à 95 % en poids.

7. Masse de remplissage selon l'une quelconque des revendications précédentes,
**caractérisée en ce que**
le composant résine époxyde (A) est une résine époxyde à base d'un di- ou triépoxyde.

8. Masse de remplissage selon la revendication 8,
**caractérisée en ce que**
le composant résine époxyde (A) est une résine époxyde à base d'un diépoxyde cycloaliphatique.

9. Masse de remplissage selon l'une quelconque des revendications précédentes,
**caractérisée en ce que**
le composant contenant du silicone (B) est une dispersion de particules d'élastomère de silicone dans une résine époxyde à base de diépoxyde.

10. Masse de remplissage selon la revendication 9,
**caractérisée en ce que**
les particules d'élastomère de silicone présentent un diamètre de particules de 10 nm à 100 µm.

11. Masse de remplissage selon l'une quelconque des revendications précédentes,
**caractérisée en ce que**
l'initiateur (D) est un agent de réticulation cationique.

12. Masse de remplissage selon la revendication 11,
**caractérisée en ce que**
l'agent de réticulation cationique est un composé bore-iodonium et/ou quinolinium.

13. Masse de remplissage selon l'une quelconque des revendications précédentes,
**caractérisée en ce que**
la masse de remplissage peut être mise en oeuvre sous forme d'un système mono-composant.

14. Utilisation d'une masse de remplissage selon l'une quelconque des revendications 1 à 13, pour la dissipation de l'énergie thermique de composants électriques.

15. Utilisation d'une masse de remplissage selon l'une quelconque des revendications 1 à 13 dans des bobinages de générateurs, en particulier dans les dynamos d'éclairage de véhicules automobiles.
